(19) Europäisches Patentamt / European Patent Office / Office européen des brevets

(11) **EP 4 527 988 A1**

(12) **EUROPEAN PATENT APPLICATION**

(43) Date of publication:
26.03.2025 Bulletin 2025/13

(21) Application number: 23199341.1

(22) Date of filing: 25.09.2023

(51) International Patent Classification (IPC):
*C25B 15/02* (2021.01)

(52) Cooperative Patent Classification (CPC):
**C25B 15/023; G05B 23/0283;** C25B 1/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **L'AIR LIQUIDE, SOCIETE ANONYME
POUR L'ETUDE ET
L'EXPLOITATION DES PROCEDES GEORGES
CLAUDE
75007 Paris (FR)**

(72) Inventors:
• **Berhaut, Paul**
  **78354 Les Loges-en-Josas (FR)**
• **Mennemann, Christina**
  **60388 Frankfurt (DE)**

(74) Representative: **Air Liquide
L'Air Liquide S.A.
Direction de la Propriété Intellectuelle
75, Quai d'Orsay
75321 Paris Cedex 07 (FR)**

(54) **MONITORING THE AGEING OF AN ELECTROLYZER**

(57) Method for performing an electrolysis with an electrolysis installation (1), comprising

a) recording a respective measurement value (5) of the electrolysis for multiple points of time (6),

b) from the points of time (6) used in step a), selecting multiple reference points of time (7), which define a reference period (8),

c) fitting a mathematical function (10) to the measurement values (5) recorded in step a) for the reference points of time (7) selected in step b),

d) performing at least one of the following sub-steps:

d1) from the mathematical function (10) obtained in step c), determining an ageing coefficient that is a measure of the ageing of the electrolysis installation (1),

d2) recording a respective measurement value (15) of the electrolysis for at least one point of time (16) that lies after the reference period (8), comparing this measurement value (15) with a corresponding value calculated with the mathematical function (10) obtained in step c) and issuing an indication in case a result of this comparison violates a tolerance criterion.

EP 4 527 988 A1

Fig. 2

**Description**

The invention is directed to a method for performing electrolysis. In particular, the described invention is directed to monitoring the ageing of an electrolyzer.

It is known that electrolyzers are subject to ageing. This is particularly an issue with electrolyzers on an industrial scale. Such electrolyzers can be used, for example, to produce hydrogen by means of a water electrolysis.

Due to the ageing effect, the operating voltage of an electrolysis stack applied at a certain operating temperature and current density can increase gradually. This is a phenomenon that is known and has been studied scientifically, primarily by means of dedicated tests in controlled conditions in a laboratory. However, these tests may not be representative of the real operating conditions where the load on the electrolysis cells fluctuates in an unpredictable manner, depending on upstream and downstream needs.

In general, it is difficult to monitor the ageing of an electrolyzer during normal operation because the analysis of the ageing usually requires comparing the operating voltage in identical operating conditions at different points of time. This direct comparison is difficult since it requires the electrolyzer to be operated at a precise operating point for several hours or even days. This is a strong constraint for the production schedule. Also, depending on the set up, it is not always possible to operate all the electrolysis stacks at the same time under the same operating conditions.

The object of the invention is to improve the prior art so that the ageing of an electrolysis installation can be monitored with fewer or even without any constraints on the production schedule.

The object is solved with the method and the arrangement according to the independent claims. Advantageous refinements are presented in the dependent claims. The features described in the claims and in the description can be combined with each other in any technologically reasonable manner.

According to the invention a method for performing an electrolysis with an electrolysis installation is described. The method comprises:

a) recording a respective measurement value of the electrolysis for multiple points of time,
b) from the points of time used in step a), selecting multiple reference points of time, which define a reference period,
c) fitting a mathematical function to the measurement values recorded in step a) for the reference points of time selected in step b),
d) performing at least one of the following sub-steps:

d1) from the mathematical function obtained in step c), determining an ageing coefficient that is a measure of the ageing of the electrolysis installation,
d2) recording a respective measurement value of the electrolysis for at least one point of time that lies after the reference period, comparing this measurement value with a corresponding value calculated with the mathematical function obtained in step c) and issuing an indication in case a result of this comparison violates a tolerance criterion.

With the described method an electrolysis is performed. That is, with the method electrolysis products can be obtained by electrolysis of an electrolysis medium. For example, the electrolysis can be a water electrolysis, wherein the electrolysis medium comprises water and the electrolysis products are oxygen and hydrogen. Such type of electrolysis can be used for hydrogen production, with oxygen being a side product. However, for the principle of the described method it is irrelevant which electrolysis medium is used and which electrolysis products are obtained.

The described method is particularly useful on an industrial scale. This can be quantified in that the electrolysis installation is an electrolyzer with a power of at least 1 MW, in particular of at least 5 MW. However, the described method also works on any other scale.

Performing the electrolysis is an actual part of the method. As a result of the method, the electrolysis products are actually obtained. The electrolysis is preferably performed continuously.

The electrolysis is performed with an electrolysis installation. The electrolysis installation can comprise one or more electrolyzers, one or more electrolysis stacks and/or one or more electrolysis cells. In particular, the electrolysis installation can be an electrolyzer with multiple electrolysis stacks that each comprise multiple electrolysis cells. However, for the operation principle of the method it is irrelevant whether the electrolysis installation is an electrolyzer, an electrolysis stack or an electrolysis cell.

In case the electrolysis installation is an electrolyzer with multiple electrolysis stacks, the described method is preferably applied to each of the electrolysis stacks individually. However, the method could also be preferably applied to the electrolyzer as a whole.

In step a) a respective measurement value of the electrolysis is recorded for multiple points of time. While the electrolysis is performed, measurement values of the electrolysis are recorded for multiple points of time. The measurement values are values of parameters associated with the electrolysis, such as voltage, current density, pressure, temperature and hydrogen-to-oxygen ratio. For each of the points of time, a respective measurement value is recorded for each of the parameters. The fact that the measurement values are recorded for the points of time means that a record is obtained which includes multiple entries, wherein each of the entries comprises a time value and a respective measurement value for each of the addressed parameters. The recording preferably takes place in real time, that is the measurement value for a certain point of time is recorded at that point of time. However, the fact that the measurement values are recorded for a certain point of time merely means that the measurement values are associated with the point of time.

Preferably, the points of time are spaced apart from each other by a constant time separation. That is, the measurement values are taken at constant intervals. However, for the evaluation described in the following, this is not required.

In step b) multiple reference points of time are selected from the points of time used in step a). Out of the points of time for which measurement values are taken in step a), those points of time are reference points of time that are selected as such in step b). The reference points of time define a reference period. The reference period spans from the first reference point of time to the last reference point of time. It is preferred, but not necessary that all points of time within the reference period are selected as reference points of time.

The measurement values recorded for the reference points of time are used as a reference, based on which a prediction for future measurements can be determined. That is, the measurement values recorded for the reference points of time can be considered historical data, based on which a prediction of the future values can be made. The measurement values recorded for the points can be considered reference data used to train the algorithm. Preferably, the reference data is obtained by filtering raw data such as to use only stable points as reference points.

The reference points are defined in that these points are used in the further steps. The reference points can be selected in various ways.

To this end, in step c) a mathematical function is fitted to the measurement values recorded in step a) for the reference points of time. The measurement values recorded for the reference points of time are thus the basis on which the mathematical function is fitted. The mathematical function fitted in step c) can be referred to as a mathematical model. That is, based on the measurement values obtained in step a), a mathematical model is defined that represents the electrolysis installation. From this mathematical model, the ageing of the electrolysis installation can be evaluated. Also, the mathematical model can be used in order to predict the behavior of the electrolysis installation at various operating points. This includes, but is not limited to operating points at which the electrolysis installation has been operated during the reference period. The behavior of the electrolysis installation at various future operating points can be predicted by extrapolation.

In case the electrolysis installation is an electrolyzer with multiple electrolysis stacks, the mathematical function can be, for example, one of the following:

$$V(t) = a + b \cdot j + c \cdot j^2 + d \cdot t + e \cdot \exp(-t_{SU}/T_0) \tag{1}$$

$$V(t) = a + b \cdot j + c \cdot j^2 + d \cdot A(t) + e \cdot \exp(-t_{SU}/T_0) \tag{2}$$

$$V(t) = a + (b + d \cdot t) \cdot j + c \cdot j^2 + e \cdot \exp(-t_{SU}/T_0) \tag{3}$$

$$V(t) = a + (b + d \cdot A(t)) \cdot j + c \cdot j^2 + e \cdot \exp(-t_{SU}/T_0) \tag{4}$$

Therein, $V(t)$ is the operating voltage of an electrolysis stack of the electrolyzer, $a, b, c, d$ and $e$ are fitting parameters determined when fitting the mathematical function, $j$ is the operating current density of the electrolysis stack, $t$ is a time parameter, i.e. the time the electrolyzer has been on stream, $t_{SU}$ is a time elapsed since the last startup and $T_0$ is a reference time parameter. It defines the timescale over which a reversible degradation share reaches its long-term equilibrium value. For example, $T_0$ can be defined as a timescale for reversible voltage increase, which can be evaluated by first training the algorithm without the "exp" term, and evaluating the settling time for reversible phenomena.

The term $a + b \cdot j + c \cdot j^2$ can be referred to as a polarization curve. Thereby, the normal operation of the electrolyzer is represented in a simplified manner. The term comprises Ohms law with an additional offset parameter $a$ and the term $c \cdot j^2$, which takes nonlinear effects into account. With the term $d \cdot t$ degradation effects are taken into account. The parameter $d$ can be referred to as the ageing coefficient in case of constant degradation. The parameter $d$ paired with the time parameter can have the unit $\mu V/h$. In equation (2) the parameter $d$ is instead paired with the amount $A(t)$ of an electrolysis product that has been produced between the first ever start-up of the electrolysis stack and the time $t$. The electrolysis product can be, in particular, hydrogen. Since the amount of the produced electrolysis product increases over time, equations (1) and (2) are equivalent to each other. With the term $e \cdot \exp(-t_{SU}/T_0)$ it is taken into account that the operating voltage has to settle after startup. The parameters $t_{SU}$ and $T_0$ can be determined accordingly. The term $e \cdot \exp(-t_{SU}/T_0)$ is fully reversible and does not relate to degradation. With equations (3) and (4) alternatives for equations (1) and (2), respectively, are provided. Therein, the parameter $d$ is defined differently so as to be multiplied with the current density as well.

Depending on the actual behavior of the electrolyzer, the equations (1) to (4) are more or less suitable. Further, various other forms of mathematical functions can be used as well. In particular, the number of fitting parameters can be varied. For example, 5 to 20 fitting parameters can be reasonable. That is, the fitting is preferably a multi-parameter fitting. Also, since the multiple measurement values are preferably taken into account for each of the points of time, the fitting is preferably a multidimensional fitting. Using more fitting parameters is in general preferred. However, for some mathematical models, the more fitting parameters are used, the more computational power is required. There are various different ageing mechanisms the electrolysis installation can be subject to. For example, some ageing mechanisms depend on the time elapsed since the electrolysis installation has first been used, some depend on the number of cycles the electrolysis installation has gone through and some depend on the operating conditions. Each ageing mechanism can be taken into account by a respective term in the mathematical function. A straightforward approach is thus to use a mathematical function that comprises a respective term for each of the conceivable ageing mechanisms. However, the more terms the mathematical function comprises, the higher is the risk that due to collinearity effects incorrect results are obtained. It is thus reasonable to use different mathematical functions and to evaluate the results.

Although it is preferred that the mathematical function is a function of the operating voltage, this is not even necessary. The basic concept of the described method can be applied to various different parameters as well.

Various mathematical fitting methods can be used in step c). For example, the minimization of the mean squared error can be used.

However, the principle of the described method is independent of how the fitting is actually achieved.

In step d) the mathematical function obtained in step c) can be used in order to evaluate the ageing of the electrolysis installation . To this end, there are two options. Correspondingly, in step d) the sub-steps d1) and/or d2) are performed. The "and" case is preferred.

In step d1) an ageing coefficient that is a measure of the ageing of the electrolysis installation is determined from the mathematical function obtained in step c). Preferably, the ageing coefficient is a parameter of the mathematical function. That is, the ageing coefficient is directly obtained as a result of fitting the mathematical function. However, it is also possible to define the ageing coefficient as a combination of multiple of the parameters of the mathematical function.

In general, the ageing coefficient can be defined in various ways. The ageing coefficient can be defined as a parameter having a unit of voltage per time, voltage per mass, voltage per volume, percent per time, percent per mass or percent per volume. For example, the ageing coefficient can be dependent on the point of time. The ageing coefficient can then be provided in a voltage unit such as millivolts. Alternatively, the ageing coefficient can be defined as a ratio between the operating voltage required to obtain a certain amount of an electrolysis product at a starting point of time and the operating voltage required to obtain the same amount of the electrolysis product at a point of time after the starting point of time. Alternatively, the ageing coefficient can be defined as a rate at which the operating voltage required to obtain a certain amount of an electrolysis product changes over time. In that case the ageing coefficient can be provided in a unit of voltage over time, in particular in microvolts per hour. This definition is particularly preferred. In equation (1) above, the fitting parameter is an ageing coefficient of this type. As shown with equations (2) to (4), the ageing coefficient can also be defined with respect to the amount of produced electrolysis product and thus have a unit of voltage over mass or voltage over volume. Also, the ageing coefficient can be multiplied with the current density and be defined accordingly.

The ageing coefficient can be defined with respect to the electrolysis installation as a whole or with respect to parts of the electrolysis installation. In case the electrolysis installation is an electrolyzer with multiple electrolysis stacks, the ageing coefficient can be defined with respect to the electrolyzer as a whole. Alternatively or additionally, a respective ageing coefficient can be defined for each of the electrolysis stacks.

The ageing coefficient obtained in step d1) can be compared directly to guarantees given by a manufacturer in order to judge the technical and economic viability of the electrolysis installation in time.

With the ageing coefficient, insights can be extracted from the measurement values recorded for the reference period. To this end, it is sufficient to record measurement values in step a) for the reference period.

However, with the mathematical function it is also possible to calculate values for points of time after the reference period. That is, the mathematical function can be used to predict what measurement values are expected in the future. If measurement values are recorded in step a) for points of time after the reference period, it is thus possible to compare the prediction obtained with the mathematical function with the actual measurement values.

Therefore, in step d2) a respective measurement value of the electrolysis is recorded for at least one point of time that lies after the reference period, and this measurement value is compared with a corresponding value calculated with the mathematical function obtained in step c) and an indication is issued in case a result of this comparison violates a tolerance criterion.

Starting from the reference point of time, a prediction can be made how the electrolysis installation is supposed to behave in the future. In step d2) this comparison is compared with the reality. This is possible because the mathematical function can be used to calculate values that lie outside the range of measurement values to which the mathematical function has been fitted, i.e. outside the reference period. This means that with the mathematical function an extrapolation of the measurement values to which the mathematical function has been fitted is possible. Therefore, at least one point of time that lies after the end of the reference period is taken into account. For this point of time a respective value is calculated with the mathematical function. This value is the prediction for the respective point of time. This prediction is compared with a measurement value obtained for the respective point of time analogously to the measurement of step a). That is, the prediction and the actual measurement value are compared for the same point of time. This can be done for a single point of time and can also be repeated for further points of time.

An indication is issued in case a result of this comparison violates a tolerance criterion. That is, it can be detected whether or not the electrolysis installation evolves over time as expected. Since minor deviations between the predicted value and the corresponding actual measurement value can be due to measurement uncertainties or the like, it is reasonable to allow for a certain tolerance. This is taken into account by means of the tolerance criterion. The tolerance criterion can be, for example, that a deviation between the predicted value and the corresponding actual measurement value is allowable as long as a predetermined threshold is not exceeded.

The indication is preferably an alarm. In that case an operator can immediately attend to the respective issue. This is particularly true in case the data analysis is performed in real time or at least with only a minor delay. However, it is also possible to analyze the recorded data significantly after the data has been recorded. In retrospect, it can be determined when the tolerance criterion was violated. From this, insights regarding the behavior and status of the electrolysis installation can be gained. In particular in this case can the indication be a signal generated by a device used for analyzing the data. In general, the indication can be a signal.

Steps d1) and d2) have in common that in both steps the mathematical function obtained in step c) is evaluated in order to assess the state of the electrolysis installation. This can be done based on the measurement data obtained in step a) during normal operation. In particular, it is not necessary to operate the electrolysis installation at a certain operating point in order to be able to compare a reference measurement and a measurement at a later point of time. Instead, the fitting of the mathematical function to the measurement values makes it possible to compare values for different operating points with each other. Thus, the ageing of the electrolysis installation can be monitored with fewer or even without any constraints on the production schedule.

In a preferred embodiment of the method the mathematical function obtained in step c) indicates an operating voltage as a function of multiple process parameters, wherein in step a) for each of the points of time respective measurement values are recorded for the operating voltage and for the process parameters.

In this embodiment, the mathematical function can be expressed as

$$V = V(P_1, P_2, P_3, \ldots), \tag{5}$$

wherein $V$ is the operating voltage and $P_1, P_2, P_3, \ldots$ process parameters of the electrolysis. The electrolysis installation preferably comprises multiple electrolysis cells, wherein each of the electrolysis cells is operated at a respective operating voltage. In that case it is preferred that the operating voltage is defined as an average of operating voltages of the electrolysis cells or as the sum of the operating voltages of the electrolysis cells.

In an alternatively preferred embodiment, the mathematical function obtained in step c) indicates the operating voltage of the electrolysis cell currently having the highest operating voltage as a function of multiple process parameters, wherein in step a) for each of the points of time respective measurement values are recorded for the operating voltage of the electrolysis cell currently having the highest operating voltage and for the process parameters.

In a further preferred embodiment of the method the process parameters include at least one of the following:

- a current density,
- an operating temperature,
- a conductivity of an electrolysis medium used for the electrolysis,
- a hydrogen-to-oxygen ratio.

The current density of the electrolysis installation is the current per active electrolysis cell area at which the electrolysis is performed. In general, this is an important parameter that is characteristic of the electrolysis. The operating temperature is the temperature of the electrolysis medium during the electrolysis.

Preferably, the process parameters include all four process parameters listed above. With these four process parameters the operating point of the electrolysis can be characterized. However, it is not necessary to use exactly these four parameters in the described method. In fact, any set of parameters can be used that characterizes electrolysis.

In case the electrolysis installation is an electrolyzer with multiple electrolysis stacks, the four parameters listed above respectively can be defined individually for an electrolysis stack or for the electrolyzer. For example, a current density of the electrolysis stack can be used together with an operating temperature of the electrolyzer. A parameter defined for the electrolyzer can be used as an approximation of the respective parameter for the electrolysis stacks. Measuring the parameter only once for the electrolyzer is easier than measuring a respective parameter for each of the electrolysis stacks.

In a further preferred embodiment of the method in step b) the reference points of time are selected such that at the reference points of time the electrolyzer operates under stabilized operating conditions.

The measurement values recorded for the reference points of time are used to fit the mathematical function and thus to obtain a mathematical model of the electrolysis installation. Subsequently, the ageing of the electrolysis installation is evaluated based on this mathematical model. Naturally, the better the mathematical model actually describes the electrolysis installation, the better are the results obtained thereby. Thus, in the present embodiment the reference points are selected particularly carefully. To this end, points of time are not taken into account, at which the electrolysis installation undergoes a change in operating conditions. During such periods, the measurement values might fluctuate significantly, which can cause inaccuracies of the mathematical model. Instead, the reference points of time are selected such that at the reference points of time the electrolysis installation operates under stabilized operating conditions. Stabilized operating conditions are those under which fluctuations are below a respectively predetermined threshold.

In the present embodiment it can be determined for each of the points of time whether or not this point of time is useable for fitting the mathematical function.

In a further preferred embodiment of the method in step b) for multiple of the points of time for at least one stability indicator a respective actual value is compared with a respective stability indicator threshold value, and wherein in case the stability indicator threshold value is not exceeded, the respective point of time is selected as one of the reference points of time.

In the present embodiment it is specified how the stabilized operating conditions can be defined. Therefore, stability indicators are used. The stability indicators can be

- standard deviation of an operating current density of the electrolysis installation over periods of 15 min, 1 h or 4 h
- standard deviation of an operating temperature of the electrolysis installation over periods of 15 min, 1 h or 4h
- trend of an operating current density of the electrolysis installation over periods of 15 min, 1h or 4h
- trend of an operating temperature of the electrolysis installation over periods of 15 min, 1h or 4h
- deviation of an operating current density of the electrolysis installation from a respective average over periods of 15 min, 1h or 4h
- deviation of an operating temperature of the electrolysis installation from a respective average value over periods of 15 min, 1h or 4h,
- deviation of an operating temperature of the electrolysis installation from a predetermined reference value,
- time since the last shutdown/start-up of the electrolysis installation .

This list is an example only. In particular, the time values provided in this list are only examples.

It is sufficient that one of these stability indicators or a different stability indicator is used. However, it is preferred that at least two, in particular at least three stability indicators are used, particularly from the list provided above. It is particularly preferred that all stability indicators listed above are used.

Each of the stability indicators is compared with a respective threshold value. In case for a certain point of time for none of the stability indicators taken into account the respective threshold value is exceeded, the respective point of time can be selected as a reference point of time. For such a point of time the operating of the electrolysis installation can be considered stabilized.

However, it is not necessary that it is determined according to the present embodiment whether or not the electrolysis installation operates at stabilized operating conditions at a certain point of time. In fact, any way can be used that allows an unambiguous definition of the stabilized operating conditions.

In a further preferred embodiment of the method in step b) the reference points of time are selected such that during the reference period all of the points of time are reference points of time.

The reference period is defined to span from the first reference point of time to the last reference point of time. Thus, in general it is not necessary for all points of time addressed in step a) that lie within the reference period to be selected as reference points of time. However, in the present embedment, this is the case. Thereby, particularly reliable results can be obtained. This is particularly the case if the reference points of time are selected such that at the reference points of time the electrolysis installation operates under stabilized operating conditions. For the present embodiment this means that the electrolysis installation operates under stabilized operating conditions throughout the entire reference period.

In the present embodiment a particularly long period is determined during which the points of time have been identified as useable for the fitting of the mathematical function.

In a further preferred embodiment of the method in step c) multiple different mathematical functions are fitted to the measurement values recorded in step a) for the reference points of time selected in step b), wherein it is subsequently decided which of the mathematical functions is used as the mathematical function for subsequent steps.

For example, equations (1) to (4) can be used as the mathematical functions. However, various other forms of mathematical functions can be used as well. Depending on the ageing mechanism the electrolysis installation is actually subject to, a different mathematical function can provide the best fit. It is thus reasonable to use multiple mathematical functions to find the best fit.

In a further preferred embodiment of the method an operator decides which of the mathematical functions is used as the mathematical function for subsequent steps.

In the present case, the operator decides which of the mathematical functions provides the best results. This decision can be based on the operator's physical understanding. For example, the operator can decide whether or not a certain obtained value for a parameter makes sense from a physical point of view.

It is possible that an expert operator performs a reference run, in which he picks the mathematical function that best fits the measurement values. Subsequently, other operators can use this mathematical function during normal operation. From time to time, the expert operator can reevaluate if a different mathematical function would provide better results.

In a further preferred embodiment of the method it is automatically decided which of the mathematical functions is used as the mathematical function for subsequent steps based on a determination which of the mathematical functions provides the best fit to the measurement values.

In the present embodiment, no decision of an operator is required. Instead, the results can be evaluated based on objective criteria. For example, for each of the fitting parameters a respective range can be defined in which this parameter should be. Also, the deviation between the mathematical function and the measurement values can be determined and the mathematical function can be selected which provides the smallest deviations.

In a further preferred embodiment of the method a load of the electrolysis is chosen according to demand, wherein steps a) to d) are performed independently of the demand.

With the described method, the ageing of the electrolysis installation can be monitored without having to compare measurement values obtained at precisely set operating conditions. Instead, the measurement values can be taken during normal operation. Thus, the ageing of the electrolysis installation can be monitored with fewer or even without any constraints on the production schedule.

In a further preferred embodiment of the method in step d2) an alarm of a first type is issued in case the measurement values recorded in step a) after the reference period deviate from a respective prediction determined with the mathematical function obtained in step c) by more than a first threshold value for more than a first duration, wherein an alarm of a second type is issued in case the measurement values recorded in step a) after the reference period deviate from a respective prediction determined with the mathematical function obtained in step c) by more than a second threshold value for more than a second duration, wherein the first threshold value is larger than the second threshold value and the first duration is shorter than the second duration.

The alarm of the first type is issued in case of a large deviation over short period of time. The alarm of the second type is issued in case of a smaller deviation over a long period of time. The terms "large", "small", "short" and "long" are each to be understood in relation between the case of the alarm of the first type and the case of the alarm of the second type. For example, the first threshold value can be 5 mV per electrolysis cell of the electrolyzer and the second threshold value can be 2.5 mV per electrolysis cell of the electrolyzer, wherein the first duration can be 2 h and the second duration can be a week.

In a further preferred embodiment the method further comprises:

e) performing maintenance of the electrolysis installation in case the ageing coefficient determined in step d1) exceeds an ageing coefficient threshold and/or in case an indication is issued in step d2).

In the present embodiment the method includes a reaction to insights obtained by the monitoring. That is, the method is not merely directed to obtaining knowledge about the electrolysis installation, but also to using this knowledge to affect the future operation of the electrolysis installation .

In a further preferred embodiment of the method in step d) periods of increased ageing are identified.

By identifying periods of increased ageing, malfunctions can be detected.

As a further aspect of the invention an arrangement is presented that comprises an electrolysis installation and a control unit, which is configured for performing an electrolysis with the electrolysis installation with a method as described.

The advantages and features of the method are transferrable to the arrangement, and vice versa. The method is preferably performed using the arrangement.

In the following the invention will be described with respect to the figures. The figures show a preferred embodiment, to which the invention is not limited. The figures and the dimensions shown therein are only schematic. The figures show:

Fig. 1:     an arrangement according to the invention,

Fig. 2:     a plot of measurement values recorded and processed in a method according to the invention,

Fig. 3:     a plot of deviations between the predicted values and the measurement values obtained in a method according to the invention.

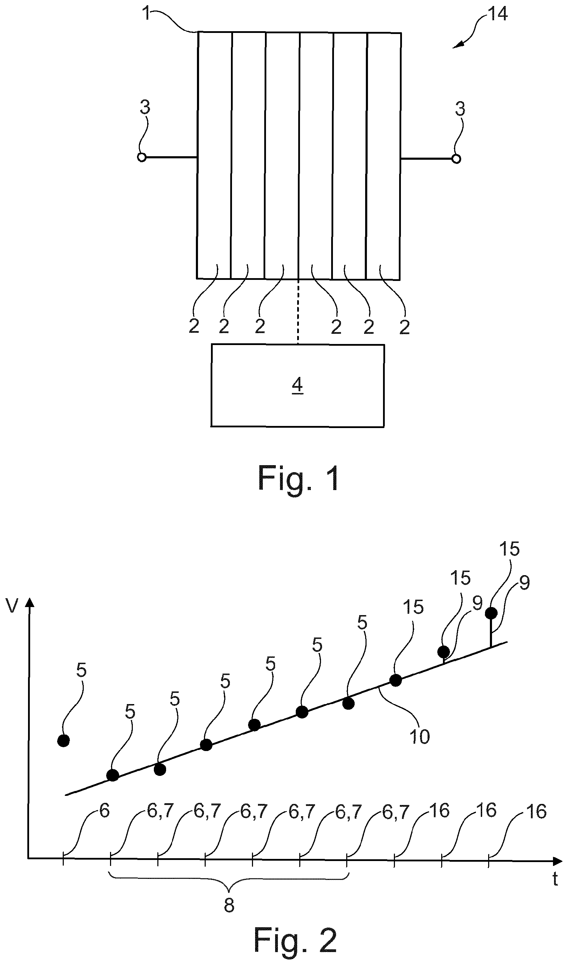

Fig. 1 shows an arrangement 14, which comprises an electrolyzer as an electrolysis installation 1. The electrolysis installation 1 comprises multiple electrolysis cells 2 and two voltage terminals 3. In particular the electrolysis installation 1 is shown only schematically. In the example of Fig. 1 the electrolysis cells 2 of the electrolysis installation 1 are arranged in a single electrolysis stack. However, the electrolysis installation 1 could also have multiple electrolysis stacks which are configured identically to the one shown in Fig. 1. Merely for simplicity, this is not shown in Fig. 1.

The arrangement 14 further comprises a control unit 4, which is connected to the electrolysis installation 1. The control unit 4 is configured for controlling the electrolysis installation 1 such that an electrolysis can be performed with the electrolysis installation 1 according to a method that comprises the following steps. The reference numerals used therein can be found in Fig. 2:

a) recording a respective measurement value 5 of the electrolysis for multiple points of time 6,

b) from the points of time 6 used in step a), selecting multiple reference points of time 7, which define a reference period 8,

c) fitting a mathematical function 10 to the measurement values 5 recorded in step a) for the reference points of time 7 selected in step b),

d) performing at least one of the following sub-steps:

d1) from the mathematical function 10 obtained in step c), determining an ageing coefficient that is a measure of the ageing of the electrolysis installation 1,

d2) recording a respective measurement value 15 of the electrolysis for at least one point of time 16 that lies after the reference period 8, comparing this measurement value 15 with a corresponding value calculated with the mathematical function 10 obtained in step c) and issuing an indication in case a result of this comparison violates a tolerance criterion.

Fig. 2 shows a plot that illustrates this method. Fig. 2 is a plot of voltage V(t) over time t. In the plot multiple measurement values 5 are shown. In this example, the measurement values 5 are basically linear with time. However, it should be noted that the plot is merely a schematic example that is supposed to illustrate the concept of the method. In particular, actual measurement values 5 can be arranged differently.

The measurement values 5 shown in Fig. 2 are those that have been recorded for the multiple points of time 6 in step a). Six of the points of time 6 have been selected as reference points of time 7 in step b). The reference points of time 7 define the reference periods. According to step c), a mathematical function 10 has been fitted to the measurement values 5 at the reference points of time 7. In the schematic example a linear function is used as the mathematical function 10. In fitting the mathematical function 10, the measurement values 5 of the single point of time 6 prior to the reference period as well as of the points of time 6 after the reference period 8 have not been taken into account. This is illustrated in that the single point of time 6 prior to the reference period 8 is significantly above the mathematical function 10. This point of time 6 is an example of a point of time 6 at which the electrolysis installation 1 did not operate under conditions suitable to be taken into account in the evaluation. Thus, this point of time 6 has not been taken into account in fitting the mathematical function 10.

With the mathematical function 10, predictions can be made for the time after the reference period 8. In step d), these predictions can be compared with the respective actual measurement values 5. This is illustrated in Fig. 2 in that for some of the points of time 6 after the reference period 8 a respective deviation 9 from the mathematical function 10 is indicated. Ideally, these deviations 9 are very small. This is illustrated in that for one of the points of time 6 after the reference period 8 no deviation is shown. In case these deviations 9 are too large, an alarm can be issued in step d2). The deviations 9 thus can be referred to as a model error.

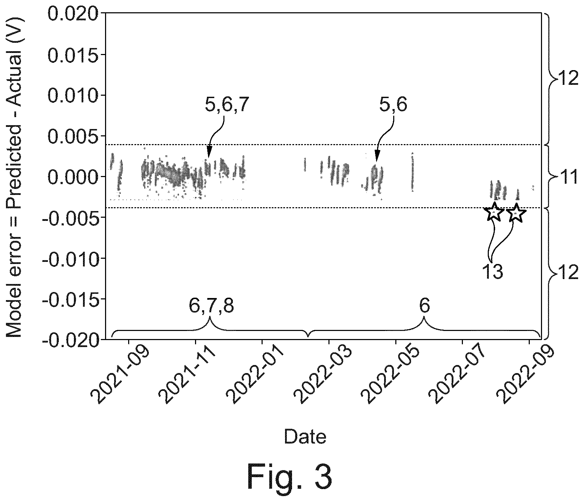

In Fig. 3 an actually measured plot of model errors over time is shown. The plot shown in Fig. 3 can be referred to as a "graph of residues". In Fig. 3 the reference period 8 is included as well. The model error during the reference period 8 is the smaller, the better the mathematical function 10 fits the measurement values 5. After the reference period 8, the model error corresponds to the deviations 9 indicated in Fig. 2.

From Fig. 3 it can be seen that the model error mainly stays within a tolerance region 11. However, once the model error exceeds a threshold, an alarm is issued. In Fig. 3 this is illustrated in that two alarm regions 12 are shown and in that two alarm events 13 are highlighted by stars.

List of reference numerals

| | |
|---|---|
| 1 | electrolysis installation |
| 2 | electrolysis cell |
| 3 | voltage terminal |
| 4 | control unit |
| 5 | measurement value |
| 6 | point of time |
| 7 | reference point of time |
| 8 | reference period |
| 9 | deviation |
| 10 | mathematical function |
| 11 | tolerance region |
| 12 | alarm region |
| 13 | alarm events |
| 14 | arrangement |
| 15 | measurement value |
| 16 | point of time |

**Claims**

1. Method for performing an electrolysis with an electrolysis installation (1), comprising

a) recording a respective measurement value (5) of the electrolysis for multiple points of time (6),
b) from the points of time (6) used in step a), selecting multiple reference points of time (7), which define a reference period (8),
c) fitting a mathematical function (10) to the measurement values (5) recorded in step a) for the reference points of time (7) selected in step b),
d) performing at least one of the following sub-steps:

d1) from the mathematical function (10) obtained in step c), determining an ageing coefficient that is a measure of the ageing of the electrolysis installation (1),
d2) recording a respective measurement value (15) of the electrolysis for at least one point of time (16) that lies after the reference period (8), comparing this measurement value (15) with a corresponding value calculated with the mathematical function (10) obtained in step c) and issuing an indication in case a result of this comparison violates a tolerance criterion.

2. Method according to claim 1, wherein the mathematical function (10) obtained in step c) indicates an operating voltage as a function of multiple process parameters, and wherein in step a) for each of the points of time (6) respective measurement values (5) are recorded for the operating voltage and for the process parameters.

3. Method according to claim 2, wherein the process parameters include at least one of the following:

- a current density,
- an operating temperature,
- a conductivity of an electrolysis medium used for the electrolysis,
- a hydrogen-to-oxygen ratio.

4. Method according to any of the preceding claims, wherein in step b) the reference points of time (7) are selected such that at the reference points of time (7) the electrolysis installation (1) operates under stabilized operating conditions .

5. Method according to any of the preceding claims, wherein in step b) for multiple of the points of time (6) for at least one stability indicator a respective actual value is compared with a respective stability indicator threshold value, and wherein in case the stability indicator threshold value is not exceeded, the respective point of time (6) is selected as one of the reference points of time (7).

6.  Method according to any of the preceding claims, wherein in step b) the reference points of time (7) are selected such that during the reference period (8) all of the points of time (6) are reference points of time (7).

7.  Method according to any of the preceding claims, wherein in step c) multiple different mathematical functions are fitted to the measurement values (5) recorded in step a) for the reference points of time (7) selected in step b), and wherein it is subsequently decided which of the mathematical functions is used as the mathematical function (10) for subsequent steps.

8.  Method according to claim 7, wherein an operator decides which of the mathematical functions is used as the mathematical function (10) for subsequent steps.

9.  Method according to claim 7, wherein it is automatically decided which of the mathematical functions is used as the mathematical function (10) for subsequent steps based on a determination which of the mathematical functions provides the best fit to the measurement values (5).

10. Method according to any of the preceding claims, wherein a load of the electrolysis is chosen according to demand, and wherein steps a) to d) are performed independently of the demand.

11. Method according to any of the preceding claims, wherein in step d2) an alarm of a first type is issued in case the measurement values (15) recorded for points of time (16) after the reference period (8) deviate from a respective prediction determined with the mathematical function (10) obtained in step c) by more than a first threshold value for more than a first duration, wherein an alarm of a second type is issued in case the measurement values (15) recorded for points of time (16) after the reference period (8) deviate from a respective prediction determined with the mathematical function (10) obtained in step c) by more than a second threshold value for more than a second duration, and wherein the first threshold value is larger than the second threshold value and the first duration is shorter than the second duration.

12. Method according to any of the preceding claims, further comprising:
    e) performing maintenance of the electrolysis installation (1) in case the ageing coefficient determined in step d1) exceeds an ageing coefficient threshold and/or in case an indication is issued in step d2).

13. Method according to any of the preceding claims, in step d) periods of increased ageing are identified.

14. Arrangement (14) comprising an electrolysis installation (1) and a control unit (4), which is configured for performing an electrolysis with the electrolysis installation (1) with a method according to any of the preceding claims.

Fig. 1

Fig. 2

Fig. 3

Europäisches
Patentamt

European
Patent Office

Office européen
des brevets

# EUROPEAN SEARCH REPORT

Application Number

EP 23 19 9341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2006/133562 A1 (RECH 2000 INC [CA])<br>21 December 2006 (2006-12-21)<br>* the whole document * | 1-10,<br>12-14<br>11 | INV.<br>C25B15/02 |
| X | CN 113 403 645 A (SUNGROW POWER SUPPLY CO LTD) 17 September 2021 (2021-09-17)<br>* the whole document * | 1,14 | |
| A | EP 3 851 560 A1 (RECH 2000 INC [CA])<br>21 July 2021 (2021-07-21)<br>* the whole document * | 1-14 | |

TECHNICAL FIELDS
SEARCHED      (IPC)

C25B
G05B

The present search report has been drawn up for all claims

| Place of search | Date of completion of the search | Examiner |
|---|---|---|
| Munich | 15 February 2024 | Juhart, Matjaz |

**ANNEX TO THE EUROPEAN SEARCH REPORT
ON EUROPEAN PATENT APPLICATION NO.**  EP 23 19 9341

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2024

| Patent document cited in search report | | Publication date | Patent family member(s) | | Publication date |
|---|---|---|---|---|---|
| WO 2006133562 | A1 | 21-12-2006 | EP | 1910588 A1 | 16-04-2008 |
| | | | ES | 2675333 T3 | 10-07-2018 |
| | | | HU | E039443 T2 | 28-12-2018 |
| | | | PL | 1910588 T3 | 31-10-2018 |
| | | | PT | 1910588 T | 23-07-2018 |
| | | | TR | 201808245 T4 | 23-07-2018 |
| | | | US | 2006289312 A1 | 28-12-2006 |
| | | | WO | 2006133562 A1 | 21-12-2006 |
| CN 113403645 | A | 17-09-2021 | NONE | | |
| EP 3851560 | A1 | 21-07-2021 | CA | 3105842 A1 | 16-07-2021 |
| | | | CN | 113136592 A | 20-07-2021 |
| | | | EP | 3851560 A1 | 21-07-2021 |
| | | | JP | 2021113357 A | 05-08-2021 |
| | | | JP | 2023116434 A | 22-08-2023 |
| | | | US | 2021222309 A1 | 22-07-2021 |

EPO FORM P0459

For more details about this annex : see Official Journal of the European Patent Office, No. 12/82